# EUROPÄISCHE PATENTSCHRIFT

(11) **EP 1 091 649 B1**
(45) Veröffentlichungstag und Bekanntmachung des Hinweises auf die Patenterteilung: **04.12.2002**
(21) Anmeldenummer: 99955195.5
(22) Anmeldetag: 21.05.1999
(51) Int. Cl.: A01N 57/00, A01N 47/28

(54) **BIOGENE KONTROLLE UND EINSCHRÄNKUNG DER VERMEHRUNG PARASITÄRER BODEN-NEMATODEN BEI DER PFLANZENAUFZUCHT**
BIOGENIC CONTROL AND LIMITATION OF THE REPRODUCTION OF PARASITIC EARTH NEMATODES IN STOCK CULTURE
CONTROLE BIOGENIQUE ET LIMITATION DE LA MULTIPLICATION DE NEMATODES DU SOL PARASITES DANS LA CULTURE DES PLANTES

(30) Priorität: 30.05.1998 DE 19824358
(43) Veröffentlichungstag der Anmeldung: 18.04.2001
(73) Patentinhaber: Cognis Deutschland GmbH & Co. KG, 40589 Düsseldorf (DE)
(72) Erfinder: BELL, Doris, D-40215 Düsseldorf (DE); KOPP-HOLTWIESCHE, Bettina, D-40599 Düsseldorf (DE); VON TAPAVICZA, Stephan, D-40699 Erkrath (DE)
(86) Internationale Anmeldenummer: EP9903495
(87) Internationale Veröffentlichungsnummer: WO99062337

(56) Entgegenhaltungen:
- EP-A- 0 068 293
- EP-A- 0 719 780
- WO-A-89/01462
- DE-A- 2 739 428
- CROW, W.T. ET AL: "Responses of Meloidogyne arenaria and M. incognita to green manures and supplemental urea in glasshouse culture." JOURNAL OF NEMATOLOGY, DEC 1996. VOL. 28, (4, SUPPL.) P. 648-654 PUBLISHER: LAKELAND, FLA.: SOCIETY OF NEMATOLOGISTS. CODEN: JONEB5;ISSN: 0022-300X, XP002115728 University of Florida, Gainesville, FL.
- DATABASE WPI Derwent Publications Ltd., London, GB; AN 84-217104 XP002115730 TOMO-E, KAGAKU KOGYO: "Controlling nematode parasites on plants-by applying a urea-aldehyde condensate to soil" & JP 59 128310 A (TOMO-N), 24. Juli 1984 (1984-07-24)
- H. REBMANN: "Lecithin" Band 16, Seiten 105-107" 1980 , ULLMANN'S ENZYKL. DER TECHNISCHEN CHEMIE , VERLAG CHEMIE-WEILHEIM-NEW YORK, 4. AUFL. XP002115729 das ganze Dokument

## Beschreibung

Die Bedeutung bodenständiger pflanzenparasitärer Nematodenstämme bei der landwirtschaftlichen Aufzucht von Kulturpflanzen und die dadurch ausgelösten Ernteausfälle und Wuchsdepressionen sind seit Jahrzehnten bekanntes Wissen der Fachwelt. Praxis und wissenschaftliche Forschung haben in der Bekämpfung dieser unerwünschten Einschränkungen bei der landwirtschaftlichen Bodennutzung eine Mehrzahl von Gegenmaßnahmen erarbeitet. So kann die Einhaltung bestimmter Fruchtfolgen - beispielsweise Zuckerrüben, Winterweizen und Wintergerste im dreijährigen Turnus - zur Reduzierung der hier angesprochenen Problematik beitragen. Der Einsatz synthetischer Nematizide ist heute aufgrund der dadurch ausgelösten Sekundärschäden in weiten Bereichen landwirtschaftlich genutzter Böden wenigstens stark eingeschränkt oder verboten. Die Einarbeitung ausgewählter organischer Substanzen zur Bodenverbesserung beziehungsweise zur Nematodenbekämpfung wird seit Jahrzehnten durchgeführt. Der Erfolg solcher Maßnahmen wird als komplexe Wechselwirkung aller Bodenlebewesen verstanden, s. hierzu beispielsweise R.C. COOKE , 1963, "Succession of nematophagous fungi during the decomposition of organic matter in soil", Nature 4863; 205 sowie S. HOFFMANN-HERGARTEN et al., 1993, "Untersuchungen zur Steigerung der Wirkung nematodenfangender Pilze gegen den Heterodera-schachtii Frühbefall durch organische Dünger", Zeitschrift für Pflanzenkrankheiten und Pflanzenschutz 100 (2); 170-175.

Die einschlägige Fachliteratur beschäftigt sich insbesondere auch mit dem Ansatz der Stimulierung der bodenbürtigen Mikroorganismenflora und dabei insbesondere solcher Stämme, die zur Ausbildung antagonistischer und/oder nematizider Wirkungen gegenüber pflanzenpathogenen Nematoden befähigt sind. Verwiesen sei hier insbesondere auf die US-PS-5,057,141 sowie die darin zitierte Literatur, hier insbesondere R. Rodriguez-Kabana et al. in "Plant and Soil", 100:237 bis 247 (1987). Beschrieben wird hier insbesondere, daß Chitin enthaltende Materialien in Abmischung mit anderen organischen Stickstoffverbindungen wie Amoniumphosphat und Harnstoff nematostatische und nematizide Aktivität in Böden gegenüber pflanzenpathogenen Nematodenpopulationen entwickeln, gleichzeitig aber den Pflanzen gegenüber nicht phytotoxisch sind, vielmehr der Pflanzennahrung dienen. In die gleiche Richtung geht die Lehre der US-PS 4,536,207. Beschrieben wird hier die nematozide Wirkung einer Chitin-Protein-Komplexverbindung, die aus einem demineralisierten wasserunlöslichen Chitin-Material und einer wasserunlöslichen Proteinkomponente gewonnen wird. Zum praktischen Einsatz müssen diese wasserunlöslichen feinteiligen Komplexverbindungen in an sich bekannter Weise mechanisch in den Boden eingearbeitet werden.

Die im nachfolgenden geschilderte Lehre der Erfindung geht von diesem zuletzt zitierten Ansatz des Standes der Technik aus. Die in den genannten US-Patentschriften eingesetzten Wertstoffgemische sind in ihren wesentlichen Anteilen, insbesondere bezüglich ihres Chitin- bzw. Chitin-Komplex-Gehaltes nicht wasserlöslich. Die Einarbeitung des unlöslichen Materials in die oberen Bodenbereiche kann dementsprechend sinnvoll nur in die noch nicht pflanzentragenden Bodenbereiche erfolgen. Nach den Angaben der US-PS 5,057,141 wird eine ausgeprägte nematizide Wirkung insbesondere erst im zweiten nachfolgenden Pflanzzyklus festgestellt.

Die erfindungsgemäße Lehre geht demgegenüber von der Aufgabe aus, ein Bodenzusatzmittel vorzuschlagen, das in fließfähiger Form und insbesondere in wäßriger Zubereitung in die betroffenen Bodenbereiche eingebracht werden kann und hier zu einer raschen Förderung der antagonistischen Wirkungen, insbesondere der hier wirkenden Mikroorganismenflora gegenüber den pflanzenpathogenen bodenbürtigen Nematoden, führt. Es soll dabei die Möglichkeit gegeben sein, das erfindungsgemäße Wertstoffgemisch sowohl vor der Aussaat beziehungsweise Bepflanzung der betroffenen Bodenbereiche als auch während dieser Vorgänge und während des nachfolgenden Pflanzenwachstums, insbesondere in den Bereich der Pflanzenwurzel, einzutragen. Die erfindungsgemäße Lehre will damit die Möglichkeit eröffnen, die insbesondere im Bereich der Rhizosphäre bzw. Mycorrhiza und damit im unmittelbaren Oberflächenbereich der Pflanzenwurzel befindlichen Stämme der Mikroorganismenflora - insbesondere der Bakterien und/oder Pilze - zu stärken, die sich durch antagonistische und/oder nematizide Wirkung gegenüber einem unerwünschten Nematodenbefall in der Pflanzenwurzel auszeichnen.

### Gegenstand der Erfindung

Gegenstand der Erfindung ist dementsprechend die Verwendung eines Wertstoffgemisches der nachfolgend definierten Komponenten zu (a) und (b) als Bodenzusatzmittel bei der Pflanzenaufzucht in Kulturböden, die von pflanzenparasitären Nematoden befallen sind und/oder in denen das angestrebte Ziel der Optimierung des Ergebnisses der Pflanzenaufzucht durch entsprechenden Nematodenbefall gefährdet ist. Wertstoffe der hier definierten Klasse zu (a) sind dabei wenigstens anteilig lipophile organische Reste aufweisende Verbindungen des Phosphors, die zusammen mit (b) Harnstoff und/oder Harnstoffderivaten zum Einsatz kommen. Die jeweils zum Einsatz kommenden Komponenten aus den Klassen zu (a) und (b) werden dabei in solchen Mengenverhältnissen von (a) : (b) eingesetzt, daß das Gewichtsverhältnis von Kohlenstoff (C) : Stickstoff (N) den Zahlenwert von etwa 6 nicht überschreitet. Bevorzugt liegt eine Obergrenze für den Zahlenwert dieses Gewichtsverhältnisses von C : N bei etwa 5.

Gegenstand der Erfindung ist in einer weiteren Ausführungsform die Anwendung von Phospholipiden pflanzlichen Ursprungs in Kombination mit Harnstoff und/oder Harnstoffderivaten zur biologischen Bekämpfung pflanzenparasitärer Boden-Nematoden mittels Stärkung des entsprechend antagonistischen Bodenpotentials - insbesondere durch Stärkung des Wachstums antagonistischer und/oder nematizider Rhizosphärebakterien und/oder entsprechender Mycorrhiza-Stämme - bei gleichzeitiger Stärkung des Wachstums der bodenständigen Pflanzenkulturen. Auch hier ist der Eintrag der erfindungsgemäßen Wertstoffgemische in der Form wäßriger Zubereitungen in die gefährdeten Bodenbereiche vor und/oder insbesondere während des Pflanzenwachstums die bevorzugte Ausführungsform.

### Einzelheiten zur erfindungsgemäßen Lehre

Biologische Lebensvorgänge und die dabei anfallenden wahrnehmbaren Effekte sind bekanntlich jeweils summarische Ergebnisse hochkomplexer Mikroorganismeninteraktionen, deren Ablauf wiederum durch eine Vielzahl von Außen- beziehungsweise Lebensbedingungen bestimmt werden kann. Mitentscheidende Bedeutung kommt dabei dem Wachstum und der Entwicklung sowohl von Mikroorganismenflora als auch der Bodenfauna zu. Insbesondere gilt dies für entsprechende Entwicklungsprozesse im Boden und die sekundären dadurch mitbestimmten Ergebnisse bei der Aufzucht bodenständiger Kulturpflanzen. Trotz dieses allgemeinen Verständnisses ist die Möglichkeit der nachhaltigen Beeinflussung dieser komplexen und miteinander verbundenen Lebensprozesse nach wie vor sehr beschränkt.

Die Lehre der DE 44 37 313 A 1 beschreibt ein Verfahren zur Verbesserung des Pflanzenwachstums im Bereich der Land- und Forstwirtschaft sowie des Gartenbaus durch Stimulierung der Mikroorganismen, die in dem Bodensubstrat leben und auf dem die Pflanzen wachsen. Vorgeschlagen wird die Verwendung bestimmter Abmischungen auf Basis von Phospholipiden, beispielsweise Lecithin, und von Phospholipidderivaten, deren Einsatz auf dem Gebiet der Landwirtschaft schon zu verschiedenen Zwecken erwähnt worden ist. So beschreiben die Europäische Patentanmeldung EP 95 071 und die Patentanmeldung WO 89/8628 die Verwendung von Phospholipiden zusammen mit Makronährstoffen als Blattdüngemittel. In der Patentanmeldung WO 93/1150 wird die Anwendung von Phospholipiden als Emulgatoren in Düngerzubereitungen erwähnt. Die DE 42 18 243 beschreibt, daß Abmischungen von Glycerophospholipiden und Harnstoff dazu geeignet sein können, bestimmte Kohlenwasserstoffe-verzehrende Mikroorganismen so zu aktivieren, daß diese Mineralölverschmutzungen im Boden schneller abbauen. Aufbauend auf diesen Erkenntnisse schlägt die Lehre der zuerst genannten DE 44 37 313 vor, Phospholipide und Phospholipidderivate insbesondere auch in Abmischung mit Harnstoff zur Stimulierung auch der in nichtkontaminierten Böden natürlicherweise lebenden Mikroorganismen einzusetzen um damit - im Sinne einer allgemeinen Düngewirkung - das Gedeihen der auf den so behandelten Böden wachsenden Pflanzen zu fördern. Die WO 89/01462 offenbart die Verwendung von Pflanzenmehl in Kombination mit einer Stickstoffquelle zur Beeinflussung des Nematodenwachstums.

Der Erfindung liegt jetzt eine nochmal wieder weiterführende Erkenntnis zugrunde: Durch Einsatz der zuvor zitierten und im nachfolgenden noch im einzelnen zu beschreibenden Wertstoffgemische wird ein Eingriff - und damit eine biologische Steuerung - in das hochkomplexe Lebensystem des Bodens möglich. Zielvorstellung ist dabei die Abwehr und/oder Reduzierung des pflanzenparasitären Nematodenwachstums und damit des Wachstums ausgewählter Stämme der Bodenfauna durch Stimulierung und damit Wachstumsförderung ausgewählter Stämme der Bodenmikroorganismenflora aus dem Bereich der Bakterien und/oder Pilze.

Grundsätzlich ist es bekannt, daß in der sogenannten Rhizosphäre, d.h. in der wenige Millimeter umfassenden Erdreichgrenzschicht im Bereich der Pflanzenwurzel und insbesondere der Wurzelhaare, eine hohe Population von Bakterienstämmen (Mikroorganismenflora) angesiedelt ist, die einerseits den Stoffaustausch zwischen Pflanzenwurzel und Erdreich fördern, andererseits aber auch eine Schutzfunktion für diesen lebenserhaltenden bodenständigen Anteil der Pflanze bewirken können. Entsprechendes gilt für den Mycorrhiza-Bereich der Interaktion zwischen Pflanzenwurzel und bodenständigen Pilzpopulationen. Der erfindungsgemäßen Lehre liegt unter anderem die Erkenntnis zugrunde, daß durch Zugabe der erfindungsgemäß beschriebenen Bodenzusatzmittel offenbar gerade auch eine Stärkung derjenigen Mikroorganismenpopulationen - und damit eine Stärkung der Bakterienund/oder Pilzstämme - im Boden bewirkt wird, die nematostatische und/oder nematizide Wirkung gegenüber pflanzenparasitären Nematoden entwickeln und damit nicht nur den weiteren Aufbau von Nematodenpopulationen im Boden verhindern oder wenigstens einschränken, sondern vor allen Dingen auch das Eindringen bereits vorliegender Nematoden in die Pflanzenwurzel begrenzen. Unabhängig davon und zusätzlich zu dieser bisher nicht bekannten Wirkung bleibt für den Einsatz der beschriebenen Wertstoffgemische die vorbekannte allgemeine Düngemittelwirkung zur Förderung des - nematodenunabhängigen - Pflanzenwachstums erhalten.

Gegenüber der Lehre der zuvor genannten US 5,057,141 und US 4,536,207 erschließen sich damit wichtige Vorteile: Das bevorzugt in wäßriger fließfähiger Zubereitungsform in die gefährdeten Bodenbereiche eingebrachte Wertstoffgemisch kann sowohl vor als auch wenigstens anteilsweise während der Keim- und/oder Wachstumsphase(n) des zu schützenden Pflanzengutes dem Boden zugesetzt werden. Eine entsprechende Behandlung kann je nach dem im Einzelfall vorliegenden Bedarf einfach und/oder beliebig oft mehrfach wiederholt werden. In einer weiterhin bevorzugten Ausführungsform der erfindungsgemäßen Lehre sind dabei den wäßrigen Zubereitungen des Bodenzusatzmittels pflanzenphysiologisch verträgliche Netzmittel, insbesondere vom O/W-Typ, zugesetzt. Diese Netzmittel unterstützen eine Spreitung der eingetragenen wäßrigen Wertstoffphase im oberen Bodenbereich und damit insbesondere im Wachstumsbereich der Pflanzenwurzel. Hierdurch gelingt es, das Wachstum der Mikroorganismenflorastämme in der Rhizosphäre und/oder entsprechender Mycorrhiza-Stämme unmittelbar zu stimulieren und damit deren nematostatische und/oder nematizide Wirkung zu stärken. Verständlich wird damit, daß auch und gerade bei der Aufzucht besonders nematodengefährdeter Kulturpflanzen, wie Zuckerrüben, durch Einsatz der erfindungsgemäßen Lehre deutlich verbesserte Ergebnisse erzielt werden können.

Die erfindungsgemäß einzusetzenden Wertstoffgemische sind durch die Kombination ausgewählter Vertreter zu den zuvor definierten Unterklassen zu (a) - wenigstens anteilig lipophile organische Reste aufweisende Verbindungen des Phosphors - und zu (b) - Harnstoff und/oder Harnstoffderivate - gekennzeichnet. Bevorzugte Komponenten zur Wertstoffklasse (a) sind Ester der Phosphorsäure mit 1-und/oder mehrwertigen Alkoholen, die in ihrer Molekülstruktur lipophile Reste aufweisen. In Betracht kommen dabei insbesondere auch entsprechende Partialester der Phosphorsäure, die dann in der Regel in Form ihrer (Partial)-Salze zum Einsatz kommen.

Geeignete Phosphorsäureester in diesem Sinne sind dementsprechend Partialester von Fettalkoholen, die über den Kohlenwasserstoffrest des Fettalkohols in das Phosphorsäureestermolekül den geforderten lipophilen Anteil eintragen. Besonders geeignet können hier insbesondere Partialester der Phosphorsäure mit geradkettigen Fettalkoholen sein, die bevorzugt wenigstens zu einem substantiellen Anteil unter Verwendung von C₆₋₁₀-Fettalkoholen und/oder ihren niederen Ethoxylaten hergestellt worden sind. Grundsätzlich geeignet sind aber auch die Phosphorsäureester höherer Fettalkohole mit beispielsweise 12 bis 24 C-Atomen, wobei hier insbesondere auch entsprechend olefinisch ungesättigten Fettalkoholresten besondere Bedeutung zukommen kann.

Besonders bevorzugte Phosphorsäureester zur Wertstoffunterklasse (a) sind allerdings Phospholipide und Phospholipidderivate. Hierbei handelt es sich bekanntlich um amphiphile Substanzen, die aus pflanzlichen oder tierischen Zellen gewonnen werden. Bevorzugte Phospholipide im Sinne der erfindungsgemäßen Lehre sind entsprechende Verbindungen pflanzlichen Ursprungs bzw. daraus gewonnene Phospholipidderivate. Ein besonders bevorzugter Vertreter dieser Stoffklasse zu (a) sind die Glycerophospholipide, die üblicherweise auch als Lecithin bezeichnet werden. Weniger bevorzugt sind die Sphingophospholipide. Bekannte und einsetzbare Substanzen sind hier die Diacylphospholipide, Phosphatidylcholine, Phosphatidylethanolamine, Phosphatidylinositole, Phosphatidylserine, Phosphatidylglycerine, Phosphatidylglycerinphosphate, Diphosphatidylglycerin, N-Acylphosphatidylethanolamin und Phosphatidinsäure. Bevorzugt sind die Monoacylphospholipide, Lysophosphatidylcholine, Lysophosphatidylethanolamine, Lysophosphatidylinositole, Lysophosphatidylserine, Lysophosphatidylglycerole, Lysophosphatidylglycerophosphate, Lysodiphosphatidylglyerine, Lyso-n-acylphosphatidylethanolamine und Lysophosphatidinsäure. Technisch zugänglich und in großen Mengen verfügbar sind die Phosphatidylglyceride, die als pflanzliche oder tierische Lecithine und Zephaline im Handel sind. Diese Zubereitungen werden beispielsweise aus ölen wie Maiskeimöl oder Baumwollsaatöl oder Sojaöl gewonnen. Erfindungsgemäß bevorzugte Komponenten zur Unterklasse (a) können enzymatisch hydrolisierte Glycerophospholipide (enzymatisch hydrolisiertes Lecithin) sein, die aufgrund der Abspaltung eines Fettsäureesters einen hydrophileren Charakter aufweisen. Ausgenommen sind dabei lediglich solche Produkte, die durch die enzymatische Hydrolyse ihren Phosphorsäurerest verloren haben.

Zusammen mit diesen Phospholipiden werden erfindungsgemäß als Wertstoffe der Unterklasse zu (b) Harnstoff und/oder Harnstoffderivate als wesentliche N-Quelle in die zu schützenden Bodenbereiche eingebracht. Dabei kennzeichnet sich weiterhin die erfindungsgemäße Lehre in ihren wichtigen Ausführungsformen durch einen zusätzlichen Bestimmungsparameter, der die Mengenverhältnisse der jeweils eingesetzten Komponentengemische zu (a) und (b) regelt. Hier gilt, daß die Abmischungen der jeweils gewählten Komponenten zu diesen beiden Unterklassen in solchen Mengenverhältnissen der Einzelkomponenten eingesetzt werden, daß das errechenbare Gewichtsverhältnis von Kohlenstoff (C) zu Stickstoff (N) in diesem Stoffgemisch aus Komponenten zu (a) und (b) den Zahlenwert von etwa 6 nicht überschreitet. Bevorzugt sind Abmischungen der Komponenten zu (a) und (b), in denen der errechenbare Zahlenwert des Gewichtsverhältnisses von C : N die Ziffer 5 und insbesondere einem Wert von 3 bis 4 nicht überschreitet. Eine geeignete Untergrenze dieses Zahlenwertes für das Gewichtsverhältnis von C : N liegt bei 1 bis 1,2, wobei weiterhin maximale Werte von etwa 2,5 und insbesondere der Bereich von etwa 1,5 bis 2 besonders bevorzugt sein können. In die Errechnung dieser Zahlenwerte zu C und N gehen dabei auch die gegebenenfalls in der Mischungskomponente zu (a) vorliegenden Stickstoffatome ein.

Werden in erfindungsgemäßen Wertstoffgemischen Phospholipide als Vertreter der Komponenten zu (a) eingesetzt, dann sind - zusammen mit Harnstoff bzw. Harnstoffderivaten als wesentliche N-Quelle - hier üblicherweise Mischungsvehältnisse - angegeben als Gewichtsteile und bezogen auf die nichtwäßrigen Einsatzmaterialien - im Bereich von 3 : 1 bis 1 : 3 Teilen Phospholipid : Harnstoff bzw. Harnstoffderivat geeignet. Es kann dabei weiterhin bevorzugt sein, etwa gleiche Mengen dieser Grundkomponenten in Abmischung miteinander einzusetzen.

Als erfindungsgemäß geeignete Harnstoffderivate kommen insbesondere die durch Kondensation des primären Harnstoffmoleküls entstehenden Oligo- bzw. Polyharnstoffe in Betracht. Sie zeichnen sich bekanntlich im praktischen Einsatz durch einen verlangsamten Abbau und damit durch eine Langzeitdüngewirkung aus. Für die erfindungsgemäße Zielvorstellung der biogenen Nematodenbekämpfung durch Stärkung des im Boden befindlichen antagonistischen und/oder nematiziden Potentials aus Bakterien- und/oder Pilzpopulationen kann ein solcher Langzeiteffekt durchaus gewünscht sein. In der Regel wird allerdings wenigstens anteilsweise Harnstoff als solcher als N-Quelle mitverwendet werden. In diesem Zusammenhang sei auf eine weitere mögliche Modifikation verwiesen: Als Bestandteil der erfindungsgemäß einzusetzenden Mehrstoffgemische sind auch andere bekannte N-Lieferanten aus der Düngemitteltechnologie geeignet. In Betracht kommen hier insbesondere entsprechende Amoniumsalze, wobei im Sinne der erfindungsgemäßen Lehre Kombinationen aus Amoniumsalzen/Harnstoff wichtige N-Lieferanten sein können. Weitere Hinweise auf geeignete Harnstoffderivate finden sich beispielsweise in der eingangs genannten US-PS 5,057,141, dort Spalte 9, Zeilen 40 bis 50.

Die im jeweiligen Einzelfall aufzubringende Menge des erfindungsgemäß definierten Bodenzusatzmittels wird von einer Mehrzahl von Faktoren bestimmt beziehungsweise mitbestimmt. Zu berücksichtigen sind hier unter anderem der Zeitpunkt der Aufbringung des Mehrkomponentengemisches in Abhängigkeit von der geplanten oder bereits vorhandenen Pflanzenaufzucht, der Bodenzustand, insbesondere die bereits vorhandene Bodenfauna und hier insbesondere der feststellbare Nematodenbefall, die Sensitivität des aufzuziehenden Pflanzengutes gegenüber der Einwirkung von pflanzenparasitären Nematoden und dergleichen. Geeignete Bereiche für den Auftrag und Eintrag der erfindungsgemäß definierten Bodenzusatzmittel zum Pflanzenschutz vor Nematodenbefall liegen üblicherweise bei wenigstens 0,2 bis 0,5 g/m² Bodenoberfläche - bezogen auf die wasserfreien Wertstoffkombinationen von Phospholipiden und Harnstoff beziehungsweise Harnstoffderivaten. Besonders bevorzugte Bereiche für geeignete Mengen der erfindungsgemäßen Bodenzusatzmittel liegen - wiederum bezogen auf die wasserfreien Abmischungen - im Bereich oberhalb 1 g/m² bis etwa 50 - 60 g/m² und vorzugsweise im Bereich von 10 bis 40 g/m² Bodenoberfläche.

Die erfindungsgemäß bevorzugt eingesetzten wäßrigen Zubereitungen dieser Bodenzusatzmittel sind in der Regel in Form entsprechender wäßriger Emulsionen und/oder Dispersionen ausgebildet. Zur Herstellung dieser Zubereitungsformen, zur Erleichterung des Eindringens dieser wäßrigen Zubereitungen in den Erdboden und insbesondere zur Spreitung der wäßrigen Wertstoffzubereitung im Erdboden werden in der bevorzugten Ausführungsform der Erfindung in den wäßrigen Zubereitungen tensidische Hilfsstoffe mitverwendet. Geeignet sind hier insbesondere biologisch verträgliche Emulgatoren vom O/W-Typ, die insbesondere ihrerseits durch die üblichen Stoffwechselprozesse der Bodenmikroorganismen dem Abbau zugänglich sind. In Betracht kommen hier sowohl entsprechende aniontensidische Verbindungen als auch insbesondere die erfindungsgemäß bevorzugten Tensidverbindungen aus der Klasse nichtionischer Tenside, die biologisch schnell und vollständig abbaubar sind.

Geeignete anionische Tenside sind beispielsweise Seifen aber auch biologisch abbaubare Alkylsulfate, insbesondere Fettalkoholsulfate. Geeignete Vertreter können sein die Partialester der Phosphorsäure mit Fettalkoholen und dabei insbesondere entsprechende Partialester mit geradkettigen Fettalkoholen, bevorzugt natürlichen Ursprungs und damit gerader Kohlenstoffzahl. Geeignet sind hier beispielsweise entsprechende Ester kürzerkettiger Fettalkohole, etwa solcher mit 6 bis 10 C-Atomen im Fettalkoholmolekül. Geeignet sind aber auch Alkylphosphate mit längeren Fettalkoholresten, beispielsweise mit 12 bis 24 C-Atomen. Im hier angesprochenen Fall kommt somit ausgewählten Vertretern zur erfindungsgemäß definierten Wertstorfklasse gem. (a) polyfunktionelle Bedeutung zu. Zusätzlich zu den zuvor diskutierten Interaktionen mit den Wertstoffen zur Unterklasse (b) kann hier Gebrauch gemacht werden von der tensidischen Funktion der angesprochenen Phosphorsäurepartialester.

Erfindungsgemäß besonders bevorzugte biologisch abbaubare Tenside sind entsprechende Verbindungen wenigstens überwiegend nichtionischen Charakters, die weiterhin bevorzugt zum wenigstens überwiegenden Anteil naturstoffbasierten Ursprungs sind und dabei bevorzugte HLB-Werte im Bereich von 10 bis 18 aufweisen. Eine erfindungsgemäß besonders bevorzugte Tensidklasse sind die Alkyl(oligo)glykosidverbindungen, deren Alkylrest sich wenigstens überwiegend von geradkettigen Fettalkoholen ableitet. Verbindungen dieser Art - nach heutigem Sprachgebrauch auch als APG-Komponenten bezeichnet - sind tensidische Hilfsstoffe eines breiten Einsatzbereiches. Netzmittel auf APG-Basis können bekanntlich voll Naturstoff-basiert sein. Auf das umfangreiche Fachwissen und Schrifttum zur Herstellung und Beschaffenheit von APG-Verbindungen der hier betroffenen Art kann verwiesen werden, s. beispielsweise die in Buchform erschienene Veröffentlichung von Hill et al. "Alkylpolyglykosides" VCH-Verlagsgesellschaft mbH, Weinheim 1997.

Geeignet sind aber auch andere biologisch abbaubare und verträgliche Tensidkomponenten mit vergleichbaren Eigenschaften. Zu nennen sind hier insbesondere entsprechende Glucamine, Glucamide oder auch Zuckerpartialester von Monocarbonsäuren mit insbesondere 8 bis 24 C-Atomen, Sorbitanester etwa von der Art des Sorbitanmonostearat oder Sorbitanmonooleat oder aber auch Tenside biologischen Ursprungs. Als Beispiele seien hier benannt Sophorose-Lipid, Trehalose-Lipid oder Lipopetide, wie sie als Stoffwechselprodukte oder Membranbestandteile einer Mehrzahl von Mikroorganismenstämmen bekannt sind. Weitere Angaben zu biologisch akzeptablen tensidischen Komponenten finden sich in der bereits mehrfach benannten DE 44 37 313.

In einer weiteren erfindungsgemäß bevorzugten Ausführungsform ist vorgesehen, den zuvor definierten Zusatzmitteln auf Basis Phospholipid/Harnstoff beziehungsweise Harnstoffderivat zusätzlich C-Lieferanten für das Wachstum der Mikroorganismenflora zuzusetzen und zweckmäßigerweise gemeinsam mit den zuvor genannten essentiellen Wertstoffkomponenten in die betroffenen Bodenbereiche einzutragen. Ein solcher kombinierter Einsatz von Trägerstoffen, die P und/oder N enthalten, zusammen mit ausgewählten zusätzlichen C-Lieferanten für das Wachstum der Mikroorganismenflora ist unter anderem Gegenstand der nicht vorveröffentlichten Deutschen Patentanmeldung DE 197 48884.6 (H 3143), deren Offenbarung hiermit ebenfalls zum Gegenstand auch der erfindungsgemäßen Lehre gemacht wird. Im nachfolgenden werden wesentliche Aussagen zu dieser zusätzlichen Wertstoffklasse der C-Lieferanten im Rahmen der erfindungsgemäß beschriebenen Wertstoffgemische beziehungsweise Bodenzusatzmittel zusammenfaßt. Zuvor sei aber auf einen wichtigen bevorzugten zusätzlichen Parameter für Wertstoffgemische der hier diskutierten Art hingewiesen:

Im Rahmen der hier beschriebenen technischen Lehre sind Wertstoffabmischungen zum Eintrag in den Bodenbereich bevorzugt, in denen die Mengenverhältnisse der insgesamt eingesetzten C und/oder N enthaltenden Komponenten so aufeinander abgestimmt sind, daß C/N-Gewichtsverhältnisse von etwa 6, und vorzugsweise von etwa 3 bis 4 nicht überschritten werden. Es kann weiterhin bevorzugt sein, das im jeweils eingesetzen Wertstoffgemisch vorliegende C/N-Verhältnis auf Werte von maximal etwa 2 bis 2,5 einzugrenzen.

Bei der Mitverwendung solcher zusätzlicher C-Lieferanten in den erfindungsgemäß einzusetzenden Bodenzusatzmitteln kann es für die Auswahl von in der wäßrigen Phase nicht löslichen Komponenten wichtig sein, solche Verbindungen auszuwählen, die wenigstens anteilsweise Stockpunkte gleich/kleiner 25 bis 30°C und insbesondere gleich/kleiner 10 bis 15°C aufweisen. Geeignete Komponenten sind hier beispielsweise olefinisch ungesättigte C₁₂₋₂₄ Fettalkohole insbesondere natürlichen Ursprungs. Besondere Bedeutung kann hier wenigstens überwiegend C_{16/18}-Fettalkoholen mit hohem Grad olefinischer Doppelbindungen und Erstarrungsbereichen gleich/kleiner 20°C, vorzugsweise gleich/kleiner 10 bis 15°C, zukommen.

Bevorzugte Vertreter solcher zusätzlichen C-Lieferanten sind öllösliche, dabei jedoch biologisch verträgliche organische Verbindungen mit aliphatischen und/oder olefinisch ungesättigten und insbesondere wenigstens überwiegend geradkettigen Kohlenwasserstoffresten mit wenigstens 6 C-Atomen und insbesondere mit wenigstens 8 C-Atomen. Entsprechende Verbindungen, die mit Sauerstoff als Heteroatom funktionalisiert sind, sind besonders bevorzugt. Klassische Beispiele hierfür sind Fettalkohole und/oder Fettsäuren beziehungsweise ihre Derivate wie Ester, insbesondere Partialester, Ether und/oder Amide. Im Zusammenhang mit der hier geschilderten Modifikation der Mitverwendung zusätzlicher C-Lieferanten können insbesondere auch solche Zusatzstoffe geeignet sein, die neben ihrem C-Gehalt zusätzlich N in der Molekülstruktur enthalten. Typische Beispiele hierfür sind Betaine, Proteine sowie Aminocarbonsäuren und deren Derivate sowie ihre Salze.

Die Mitverwendung solcher zusätzlichen C-Lieferanten ist - wie angegeben - eine mögliche aber keineswegs zwingende Maßnahme im Sinne des erfindungsgemäßen Handelns. Der Kern der erfindungsgemäßen Lehre liegt in der Stärkung der nematostatischen/nematiziden Wirkung des über die flüssige Zubereitung möglichst bis in die Rhizosphäre eingetragenen Wertstoffgemisches aus den Komponenten zu (a) und (b) und damit insbesondere aus Phospholipiden und Harnstoff beziehungsweise Harnstoffderivaten. Diese angestrebte Wirkung wird auch ohne Mitverwendung der zuletzt erwähnten zusätzlichen C-Lieferanten erreicht.

Das erfindungsgemäße Prinzip der Wachstumsstärkung antagonistischer und/oder nematizider Mikroorganismen aus dem Bereich der Bodenbakterien und/oder -pilze führt insbesondere in den Fällen zu rasch ausgeprägten Effekten, in denen in den zu behandelnden Bodenbereichen entsprechende Mikroorganismenpopulationen im Sinne von Starterkulturen bereits vorliegen. Unter Berücksichtigung der heute in der Praxis gegebenen weiten Verbreitung pflanzenparasitärer Nematodenstämme ist von einer entsprechend breiten Präsenz im erfindungsgemäßen Sinn geeigneter Mikroorganismenpopulationen im Bereich landwirtschaftlich genutzter Bodenflächen auszugehen. In an sich bekannter Weise kann aber zusätzlich von dem heutigen Fachwissen Gebrauch gemacht werden, Kulturen geeigneter Bakterienund/oder Pilzstämme mit der gewünschten antagonistischen bzw. nematiziden Wirkung als Starterkulturen in den zu behandelnden Bodenbereich einzubringen. Auf das allgemeine Fachwissen kann in diesem Zusammenhang verwiesen werden. Lediglich beispielhaft seien die folgenden Veröffentlichungen benannt: J. Coosemans (1991), "Methods for introducing *Verticillium chlamydosporium* into soil." in: KERRY, B.R. & CRUMP, D.H.: Methods for studying nematophagous fungi. IOBC/WPRS Bulletin XIV/2; 39-45 sowie A. Ciancio (1995), "Observations on the nematicidal properties of some mycotoxins", Fundam. appl. Nematol. 18(5); 451-454.

Eine weitere mögliche Variante im Rahmen der erfindungsgemäßen Lehre liegt in der Kombination aus dem Stand der Technik bekannter Maßnahmen zur Nematodenbekämpfung und den jetzt erfindungsgemäß vorgeschlagenen Maßnahmen. So kann insbesondere vorgesehen sein, im Sinne der eingangs zitierten US-PS 5,057,141 und 4,536,207 sowie der darin zitierten Literatur zunächst die wasserunlöslichen Wirkstoffe bzw. Wirkstoffgemische insbesondere auf Basis von Chitin bzw. Chitin/Protein-Komplexen in den zu behandelnden Bodenbereich einzuarbeiten, dann aber zusätzlich insbesondere im Verlaufe des Pflanzenwachstums die Vorteile der erfindungsgemäß in wäßriger Zubereitungsform einzubringenden Wertstoffgemische auszunutzen. Es leuchtet ein, daß durch eine solche Kombination von Arbeitsschritten die biogene Stärkung und Schutzfunktion der im erfindungsgemäßen Sinne zu stärkenden Mikroorganismenstämme besonders ausgeprägt ermöglicht wird.

Die erfindungsgemäß zum Einsatz kommenden Wertstoffgemische können in Form wäßriger Konzentrate hergestellt und gelagert werden, die vor dem Ausbringen in den Boden mit Wasser weiter verdünnt werden. Geeignete Konzentrate im Sinne der Erfindung sind beispielsweise wie folgt zusammengesetzt: 10 bis 30 Gew.-% Lecithin und/oder Lecithinhydrolysat;10 bis 30 Gew.-% Harnstoff bzw. Harnstoffderivat; 1 bis 10 Gew.-% Tensid, gegebenenfalls weitere Hilfsstoffe und zum Rest auf 100 Gew.-% Wasser. Konzentrate dieser Art werden vor dem Ausbringen auf das zu schützende Erdreich vorzugsweise im Verhältnis 1 : 20 bis 1 : 100 mit Wasser verdünnt. Das Ausbringen der wäßrigen Zubereitung kann in jeder an sich bekannten Weise vorgenommen werden. Dabei ist sowohl eine gleichmäßige Verteilung der Flüssigphase auf der Substratoberfläche als auch der gezielte punktförmige Eintrag - z.B. im sogenannten Hydro-Ject-Verfahren - geeignet. Die im Sinne der Erfindung mitverwendeten tensidischen Komponenten führen auch bei einem solchen punktförmigen Eintrag in den Boden zu einer Spreitung der wäßrigen Wertstoffgemische im Horizontalbereich.

Möglich ist insbesondere aber auch den Einsatz der erfindungsgemäß beschriebenen Wertstoffe bzw. Wertstoffgemische mit der Zugabe heute in der Praxis üblicher chemischer Mittel zur Nematodenbekämpfung zu kombinieren. Diese heute in breitem Umfang eingesetzten chemischen Nematizide sind Gegenstand zahlreicher druckschriftlicher Veröffentlichungen. Lediglich beispielhaft sei verwiesen auf die Angaben der in Buchform erschienenen Veröffentlichung H. Börner, "Pflanzenkrankheiten und Pflanzenschutz", 5. Auflage, Verlag Eugen Ulmer, Stuttgart, 1983, Seiten 128 bis 132.

Wird eine solche Kombination der erfindungsgemäßen Lehre mit konventionellen Nematiziden eingesetzt, dann kann die Einsatzmenge dieser konventionellen Hilfsstoffe substantiell verringert werden, ohne daß ernsthafte Wirkungsverluste zu befürchten wären. Auf diese Weise können Einsparungen der üblicherweise auf die synthetische Chemie zurückgehenden Nematizide des Standes der Technik von wenigstens 30%, vorzugsweise von wenigstens 50 bis 75% möglich werden, ohne Wachstums- und/oder Ertragseinbußen befürchten zu müssen.

Die nachfolgenden Beispiele beschreiben den Einsatz solcher Bodenzusatzmittel und die dadurch ausgelöste Reduktion des Nematodenbefalls der Pflanzenwurzel bei gleichzeitiger substantieller Steigerung des Pflanzenlebendgewichtes gegenüber der Kontrollprobe.

### Beispiele

Die in den nachfolgenden Beispielen geschilderten Untersuchungen gehen von dem folgenden Hintergrund aus: In der Nähe von Pflanzenwurzeln - in der Rhizosphäre - besteht ein erhöhtes Angebot an organischen Säuren, z.B. Zitronensäure, die über die Wurzel ausgeschieden werden. Diese erleichtern der Pflanzenwurzel die Aufnahme von in Bodenwasser gelösten Nährstoff-Ionen. Als Folge des erhöhten Nährstoffangebotes stellt die Rhizosphäre eine Zone hoher biologischer und mikrobiologischer Aktivität dar.

Von Rhizosphäre-Bakterien ist bekannt, daß sie das Immunsystem der Pflanzen stärken und damit das Eindringen von Nematoden in die Wurzel erschweren können. Beschrieben sind vor allem Stämme von Pseudomonas fluorescens.

In den als Mikroplot-Freilandversuch angelegten Untersuchungen gem. dem nachfolgenden Beispiel 1 wurde die Wirkung eines erfindungsgemäß formulierten Bodenzusatzstoffes sowie die Wirkung zugesetzter Rhizosphäre-Bakterien im Hinblick auf die Verminderung der Eindringrate des Zystennematoden Heterodera schachtii in die Wurzel von Zuckerrübenpflanzen getestet. Von dem ausgewählten Standort war bekannt, daß er mit den genannten Nematoden befallen war.

Als erfindungsgemäß anzuwendende Wirkstoffkombination wird ein wäßriges Wertstoffkonzentrat der nachfolgend definierten Komponenten eingesetzt:

| | |
|---|---|
| 19,9 Gew.-% | Harnstoff (N-Quelle) |
| 19,8 Gew.-% | enzymatisch hydrolysiertes Sojalecithin (Handelsprodukt "Lipothin NE") als N- und P-Quelle |
| 1,0 Gew.-% | des O/W-Netzmittels auf APG-Basis mit überwiegend C_{12/14}-Fettalkoholresten ("APG 600") als Emulsionsstabilisator |

zum Rest Wasser.

### Beispiel 1

In der Anwendungsform des Mikroplot-Freilandversuches werden drei Ansätze verfolgt:
1. Zuckerrübenentwicklung ohne Zusatzstoffe (Kontrolle)
2. Zuckerrübenentwicklung in Gegenwart einer Zuimpfung von Pseudomonas fluorescens
3. Zuckerrübenentwicklung in Gegenwart einer Zuimpfung von Pseudomonas fluorescens unter Zusatz des erfindungsgemäß definierten Bodenzusatzstoffes

In allen Untersuchungen wurde jeweils eine ausreichend große Zahl von Pflanzen ausgebracht um die Freilandergebnisse statistisch relevant bewerten zu können.

Im einzelnen wird dabei wie folgt vorgegangen:

Die Zuckerrübensamen - es handelte sich um mit Methylcellulose behandeltes standardisiertes Saatgut - wurden partiell mit einer im Labor vermehrten Lösung von Pseudomonas fluorescens behandelt. Wenngleich die Ausgangskeimdichte basierend auf Erfahrungswerten mit 10⁷ bis 10⁸ Keimen/Samen ausreichend hoch und damit ein pflanzenstärkender Effekt zu erwarten sein sollte, reduzierte sich die erfaßbare Lebendkeimzahl aufgrund von Trocknungseffekten der Pilierungsmasse innerhalb weniger Stunden auf 10⁴ Keime/Samenkorn. Diese Bakterienzahl wäre erwartungsgemäß nicht ausreichend, um pflanzenstärkende Effekte zu bewirken, entspräche aber der Bakterienmasse, die sich unter natürlichen Bedingungen - d.h. durch Ansiedlung von im Boden vorkommenden Bakterien auf der Wurzel - einstellen würde. Zur Ermittlung des synergistischen Effekts zwischen Rhizosphärebakterien und dem erfindungsgemäßen Bodenzusatzstoff war das hier eingesetzte Saatgut somit hervorragend geeignet.

In den Untersuchungen unter Zusatz und Mitverwendung des erfindungsgemäßen Wertstoffgemisches wurde im einzelnen wie folgt vorgegangen: Nach Auflaufen der Saat wurde diese mit dem erfindungsgemäßen Bodenzusatzstoff im Gießverfahren behandelt. Die Einsatzmenge des zuvor definierten Wirkstoffkonzentrates betrug dabei 20 g/m². Zum Aufbringen der wäßrigen Zubereitung wurde das Konzentrat mit Wasser im Verhältnis 1 : 50 verdünnt, d.h. es wurden 20 g Konzentrat pro 1 l Wasser pro 1 m² aufgebracht.

Die Wachstumsperiode der Zuckerrüben betrug in allen Versuchen 3 Monate. Da es sich um Freilandversuche handelte, erfolgte die Bewertung ausschließlich am Versuchsende über die Ermittlung des Nematodenbefalls in den Wurzeln. Hierbei konnten die folgenden Ergebnisse festgestellt werden:

Gegenüber der unbehandelten Kontrolle konnten unter Zusatz der Rhizosphärebakterien allein noch keine Effekte festgestellt werden.

Die Kombination "Zuimpfung von Rhizosphärebakterien" und "Aufbringen des erfindungsgemäßen Bodenzusatzstoffes" erbrachte eine Reduktion des Nematodenbefalls um 30%. Der Zuckerrübenertrag innerhalb des Versuchszeitraums war hier außerdem leicht gesteigert.

### Beispiel 2

Bestimmt wird in einer zweiten Reihe von Untersuchungen der direkte Effekt des erfindungsgemäßen Bodenzusatzstoffes auf die Eindringrate von Zystennematoden Heterodera schachtii in die Wurzel junger Zuckerrübenpflanzen. Die Versuche wurden als Topfversuche im Gewächshaus angelegt. Auch hier werden Untersuchungen einerseits ohne Zusatz der erfindungsgemäßen Wirkstoffgemische (Kontrolle) und entsprechende Untersuchungen unter Zusatz des erfindungsgemäßen Wertstoffgemisches gegeneinander gestellt. Im einzelnen gilt für diese Versuchsreihe:

Als Substrat wird unsteriles Felderde/Sand-Gemisch in einer Menge von 150 cm³ pro Topf eingesetzt.
Es werden 10 Wiederholungen pro Ansatz jeweils mit und ohne Zusatz der erfindungsgemäßen Wirkstoffgemische durchgeführt.
Die Aussaat beträgt 10 Zuckerrübensamen/Topf, nach dem Auflaufen wird eine Vereinzelung auf 5 Pflanzen/Topf vorgenommen.
Die Inokulation mit Zysten von Heterodera schachtii erfolgt 7 Tage nach Aussaat.
Die Applikation des erfindungsgemäßen Bodenzusatzstoffes erfolgt einen Tag nach Inokulation mit den Nematodenzysten.
Die Aufwandmenge des erfindungsgemäßen Wertstoffkonzentrats beträgt 40 g/m², das Konzentrat wird zum Aufbringen im Verhältnis 1 : 50 mit Wasser verdünnt.
Die Versuchsauswertung erfolgt 3 Wochen nach der Nematodeninokulation.

Bestimmt werden in dieser Versuchsauswertung die jeweiligen Sproß- und Wurzelfrischgewichte sowie die Eindringrate von Nematoden in die Wurzel.

Der Vergleich der Kontrollproben mit den erfindungsgemäß behandelten Probeansätzen liefert die folgenden Ergebnisse: Gegenüber der Kontrolle (100%) wurden durch Einsatz des erfindungsgemäßen Bodenzusatzstoffes die folgenden Resultate erreicht:
- Reduktion der Nematodeneindringrate um 70%
- Pflanzenstärkender Effekt bei den unter die Lehre der Erfindung fallenden Pflanzen: Hier wird eine Verdopplung des Sproßgewichts und Zunahme des Wurzelgewichts um 150% bestimmt.

in den nachfolgenden Beispielen 3 bis 7 wird als erfindungsgemäß anzuwendende Wirkstoffkombination ein wäßriges Wertstoffkonzentrat eingesetzt, daß von der Anmelderin unter dem Handelsnamen "TerraPy B" vertrieben wird und eine Abmischung der nachfolgenden Komponenten darstellt:

| | |
|---|---|
| 20 Gew.-% | Harnstoff |
| 20 Gew.-% | enzymatisch hydrolysiertes Sojalecithin (Handelsprodukt Lipotin NE der Fa. Lucas Meyer) |
| 1 Gew.-% | APG 600 |

zum Rest Wasser.

### Beispiel 3

Gefäßversuch mit Zuckerrüben

### Methoden

Zuckerrüben wurden im (18°C) temperierten Gewächshaus vorgekeimt und je eine Pflanze im 2-Blatt-Stadium in Kunststofftöpfe (9x9 cm) mit je 500 g Felderde-Sand-Gemisch (1:1) pikiert. Die Applikation der Testsubstanzen erfolgte 2 Tage nach dem Pikieren. Einen weiteren Tag später wurden 500 Larven des Nematoden Heterodera schachtii pro Topf inokuliert. 6 Wochen später wurde der Versuch beendet, die Nematodendichte sowie Sproß- und Wurzelgewichte der Pflanzen bestimmt.

In der Anwendung wurden folgende Varianten (mit je 10 Wiederholungen) gewählt:
- ungedüngte, unbehandelte Kontrolle
- gedüngte Kontrolle (N-/P-Menge entspricht 40 g/m² TerraPy G)
- mit Nematizid behandelte Kontrolle (Aldicarb, 1 ppm)
- TerraPy B 20 g/m²
- TerraPy B 40 g/m²

### Ergebnisse:

Das Pflanzenwachstum wird durch das erfindungsgemäße Wirkstoffgemisch deutlich gesteigert, wobei die Effekte auf das Sproßgewicht denen einer herkömmlichen mineralischen Düngung ähneln (Tab. 1). Deutliche Vorteile bietet das hier beschriebene Wirkstoffgemisch hinsichtlich der Entwicklung des Wurzelgewichtes: Verdopplung des Wurzelgewichtes bei gleicher Nährstoffzufuhr. Mineraldünger fördern nur den Wuchs oberirdischer Pflanzenteile, nicht aber der Wurzeln. Das Wirkstoffgemisch fördert hingegen auch die Entwicklung der Wurzeln, so daß die Pflanze insgesamt gestärkt wird. Das hier eingesetzte herkömmliche Nematizid Aldicarb besitzt keine das Pflanzengewicht fördernde Wirkung.

**Tab. 1:**

| Effekte auf das Pflanzenwachstum von Zuckerrüben | | |
|---|---|---|
| Variante | Sproßgewicht in g | Wurzelgewicht in g |
| ungedüngte, unbehandelte Kontrolle | 2,3 | 0,8 |
| mit Nematizid behandelte Kontrolle | 2,1 | 0,7 |
| gedüngte Kontrolle | 6,0 | 1,0 |
| TerraPy B 20 g/m² | 5,5 | 1,8 |
| TerraPy B 40 g/m² | 7,2 | 2,2 |

Die Vermehrung des Nematoden H. schachtii wurde durch die erfindungsgemäße Wirkstoffkombination in einer Aufwandmenge von 40 g/m² signifikant unterdrückt (Tab. 2). Der Effekt war fast ebenso stark ausgeprägt wie das zu Vergleichszwekken herangezogene Nematizid.

**Tab. 2:**

| Effekte auf die Wurzelschädigung | | |
|---|---|---|
| Variante | Nematodenzysten pro g Wurzelgewicht | Signifikanzklasse |
| ungedüngte, unbehandelte Kontrolle | 80 | a |
| gedüngte Kontrolle | 40 | b |
| TerraPy B 20 g/m² | 40 | b |
| mit Nematizid behandelte Kontrolle (Aldicarb) | 15 | c |
| TerraPy B 40 g/m² | 22 | c |

Die das Pflanzenwachstum und die Pflanzengesundheit fördernde Aktivität von Bakterien wird durch das erfindungsgemäße Wirkstoffgemisch stark und lang anhaltend gefördert (Tab. 3). Deutlich wird der schädliche Effekt des Nematizids Aldicarb auf die Mikroorganismen.

**Tab. 3:**

| Effekte auf Mikroorganismen (Bakterien pro g Boden) | | | |
|---|---|---|---|
| Variante | 2 Tage nach Applikation | 14 Tage nach Applikation | 56 Tage nach Applikation |
| ungedüngte, unbehandelte Kontrolle | 7 x 10⁷ | 8 x 10⁶ | 2 x 10⁷ |
| mit Nematizid behandelte Kontrolle (Aldicarb) | 7 x 10⁶ | 8 x 10⁶ | 1 x 10⁷ |
| gedüngte Kontrolle | 4 x 10⁷ | 2 x 10⁷ | 1 x 10⁷ |
| TerraPy B 20 g/m² | 1 x 10⁸ | 1 x 10⁷ | 8 x 10⁷ |
| TerraPy B 40 g/m² | 5 x 10⁸ | 1 x 10⁷ | 5 x 10⁷ |

### Beispiel 4

Gefäßversuch mit Tomaten

### Methoden

Tomaten wurden im (18°C) temperierten Gewächshaus vorgekeimt und je eine Pflanze im 2-Blatt-Stadium in Kunststofftöpfe (9x9 cm) mit je 500 g Felderde-Sand-Gemisch (1:1) pikiert. Die Applikation der Testsubstanzen erfolgte 2 Tage nach dem Pikieren. Einen weiteren Tag später wurden 1.000 Larven des Nematoden Meloidogyne incognita pro Topf inokuliert. 8 Wochen später wurde der Versuch beendet, die Nematodendichte sowie Sproß- und Wurzelgewichte der Pflanzen bestimmt.

In der Anwendung wurden folgende Varianten (mit je 10 Wiederholungen) gewählt:
- ungedüngte, unbehandelte Kontrolle
- gedüngte Kontrolle (N-/P-Menge entspricht 40 g/m² TerraPy B)
- mit Nematizid behandelte Kontrolle (Aldicarb, 1 ppm)
- TerraPy B 20 g/m²
- TerraPy B 40 g/m²

### Ergebnisse:

Das Pflanzenwachstum wird durch das erfindungsgemäße Wirkstoffgemisch deutlich gesteigert, wobei die Aufwandmenge von 20 g/m² eine bessere Düngewirkung zeigt als die doppelt so hohe mineralische Düngung (Tab. 1). Herkömmliche Nematizide wie das hier eingesetzte Aldicarb besitzen keine das Pflanzengewicht fördernde Wirkung, fördern aber ebenso wie das hier beschriebene Wirkstoffgemisch die Wurzel-(längen-)entwicklung.

**Tab. 1:**

| Effekte auf das Pflanzenwachstum von Tomaten | | | |
|---|---|---|---|
| Variante | Sproßgewicht in g | Wurzelgewicht in g | Wurzellänge in cm |
| ungedüngte, unbehandelte Kontrolle | 4,8 | 1,6 | 4,5 |
| mit Nematizid behandelte Kontrolle | 4,7 | 1,5 | 12,0 |
| gedüngte Kontrolle | 8,2 | 2,1 | 7,0 |
| TerraPy B 20 g/m² | 8,5 | 2,4 | 10,1 |
| TerraPy B 40 g/m² | 9,8 | 2,7 | 11,5 |

Die Vermehrung des Nematoden M. incognita wurde durch die erfindungsgemäße Wirkstoffkombination signifikant unterdrückt (Tab. 2). Der Effekt war schwächer ausgeprägt als das zu Vergleichszwecken herangezogene Nematizid, aber bedeutend stärker als bei mineralischer Düngung. Der Gallindex stellt ein Maß für den durch die Nematoden verursachten Schaden am Wurzelsystem dar, wobei die Werte 1 - 10 angenommen werden können (mit 1 als "nicht geschädigtes" und 10 als "vollständig geschädigtes Wurzelsystem).

**Tab. 2:**

| Effekte auf die Wurzelsystem | | |
|---|---|---|
| Variante | Gallindex | Signifikanzklasse |
| ungedüngte, unbehandelte Kontrolle | 8,1 | a |
| gedüngte Kontrolle | 7,2 | b |
| TerraPy B 20 g/m² | 6,2 | c |
| TerraPy B 40 g/m² | 6,0 | c |
| mit Nematizid behandelte Kontrolle | 3,9 | d |

Die das Pflanzenwachstum und die Pflanzengesundheit fördernde Aktivität von Bakterien wird durch das erfindungsgemäße Wirkstoffgemisch stark und lang anhaltend gefördert (Tab. 3). Deutlich wird der schädliche Effekt des Nematizids Aldicarb auf die Mikroorganismen.

**Tab. 3:**

| Effekte auf Mikroorganismen (Bakterien pro g Boden) | | | |
|---|---|---|---|
| Variante | 2 Tage nach Applikation | 14 Tage nach Applikation | 56 Tage nach Applikation |
| ungedüngte, unbehandelte Kontrolle | 6 x 10⁷ | 3 x 10⁷ | 1 x 10⁶ |
| mit Nematizid behandelte Kontrolle | 1 x 10⁷ | 4 x 10⁷ | 1 x 10⁶ |
| gedüngte Kontrolle | 2 x 10⁶ | 7 x 10⁷ | 1 x 10⁶ |
| TerraPy B 20 g/m² | 3 x 10⁷ | 1 x 10⁸ | 2 x 10⁷ |
| TerraPy B 40 g/m² | 1 x 10⁸ | 2 x 10⁸ | 2 x 10⁷ |

### Beispiel 5

Gefäßversuch mit Tomaten

### Methoden

Tomaten wurden im (18°C) temperierten Gewächshaus vorgekeimt und je eine Pflanze im 2-Blatt-Stadium in Kunststofftöpfe (9x9 cm) mit je 500 g Felderde-Sand-Gemisch (1:1) pikiert. Die Applikation der Testsubstanzen erfolgte 2 Tage nach dem Pikieren. Einen weiteren Tag später wurden 1.000 Larven des Nematoden Meloidogyne incognita pro Topf inokuliert. 6 Wochen später wurde der Versuch beendet, die Nematodendichte sowie Sproß- und Wurzelgewichte der Pflanzen bestimmt.

In der Anwendung wurden folgende Varianten (mit je 8 Wiederholungen) gewählt:
- ungedüngte, unbehandelte Kontrolle
- gedüngte Kontrolle (N-/P-Menge entspricht 20 g/m² TerraPy B)
- mit Nematizid behandelte Kontrolle (Aldicarb, 1 ppm)
- TerraPy B 20 g/m²
- TerraPy B 2 g/m²

Ziel dieses Versuchs war die Prüfung der unteren, effektiven Aufwandmenge des Produktes.

### Ergebnisse:

Das Pflanzenwachstum wird durch das erfindungsgemäße Wirkstoffgemisch deutlich gesteigert, wobei die Aufwandmenge von 20 g/m² eine signifikant bessere Düngewirkung zeigt als die ebenso hohe mineralische Düngung (Tab. 1).

**Tab. 1:**

| Effekte auf das Pflanzenwachstum von Tomaten | | |
|---|---|---|
| Variante | Sproßgewicht in g | Signifikanzklasse |
| ungedüngte, unbehandelte Kontrolle | 3 | a |
| mit Nematizid behandelte Kontrolle | 4,2 | b |
| gedüngte Kontrolle | 6,1 | c |
| TerraPy B 20 g/m² | 8,6 | d |
| TerraPy B 40 g/m² | 5,2 | bc |

Die Vermehrung des Nematoden M. incognita wurde durch die erfindungsgemäße Wirkstoffkombination signifikant unterdrückt (Tab. 2). Der Effekt war schwächer ausgeprägt als das zu Vergleichszwecken herangezogene Nematizid, aber bedeutend stärker als bei mineralischer Düngung. Zur Bedeutung des Gallindex siehe die Angaben des Beispiels 4.

**Tab. 2:**

| Effekte auf das Wurzelsystem von Tomate | | |
|---|---|---|
| Variante | Gallindex | Signifikanzklasse |
| ungedüngte, unbehandelte Kontrolle | 8,1 | d |
| gedüngte Kontrolle | 6,9 | c |
| TerraPy B 2 g/m² | 6,8 | c |
| TerraPy B 20 g/m² | 5,2 | b |
| mit Nematizid behandelte Kontrolle | 4,2 | a |

Die das Pflanzenwachstum und die Pflanzengesundheit fördernde Aktivität von Bakterien wird durch das erfindungsgemäße Wirkstoffgemisch stark und lang anhaltend gefördert (Tab. 3). Deutlich wird der schädliche Effekt des Nematizids Aldicarb auf die Mikroorganismen.

Im Ergebnis wird die hier beschriebene Aufwandmenge von 2 g/m² des erfindungsgemäßen Wirkstoffgemischs als Untergrenze für einen hohen Nematodendruck angesehen. Eine Stimulierung der Mikroorganismenflora war aber selbst bei der hier beschriebenen niedrigen Aufwandmenge noch gegeben (Tab. 3).

**Tab. 3:**

| Effekte auf Mikroorganismen (Bakterien pro g Boden) | | | |
|---|---|---|---|
| Variante | 2 Tage nach Applikation | 14 Tage nach Applikation | 56 Tage nach Applikation |
| ungedüngte, unbehandelte Kontrolle | 4 x 10⁷ | 2 x 10⁶ | 1 x 10⁶ |
| mit Nematizid behandelte Kontrolle | 6 x 10⁶ | 1 x 10⁶ | 5 x 10⁵ |
| gedüngte Kontrolle | 7 x 10⁶ | 2 x 10⁶ | 2 x 10⁶ |
| TerraPy B 2 g/m² | 3 x 10⁷ | 7 x 10⁶ | 3 x 10⁶ |
| TerraPy B 20 g/m² | 9 x 10⁷ | 1 x 10⁷ | 7 x 10⁶ |

### Beispiel 6

Gefäßversuch mit Tomaten: Reduktion von Nematiziden

### Methoden

Tomaten wurden im (18°C) temperierten Gewächshaus vorgekeimt und je eine Pflanze im 2-Blatt-Stadium in Kunststofftöpfe (9x9 cm) mit je 500 g Felderde-Sand-Gemisch (1:1) pikiert. Die Applikation der Testsubstanzen erfolgte 2 Tage nach dem Pikieren. Einen weiteren Tag später wurden 1.000 Larven des Nematoden Meloidogyne incognita pro Topf inokuliert. 6 Wochen später wurde der Versuch beendet, die Nematodendichte sowie Sproß- und Wurzelgewichte der Pflanzen bestimmt.

In der Anwendung wurden folgende Varianten (mit je 10 Wiederholungen) gewählt:
- ungedüngte, unbehandelte Kontrolle
- gedüngte Kontrolle (N-/P-Menge entspricht 20 g/m² TerraPy B)
- mit Nematizid behandelte Kontrolle (Aldicarb, 1 ppm)
- TerraPy B 20 g/m²
- TerraPy B 20 g/m² plus Aldicarb 0,1 ppm

Desweiteren wurden Töpfe mit allen o.g. Varianten, jedoch ohne Nematodeninokulation mitgeführt.

### Ergebnisse:

Das Pflanzenwachstum wird durch das erfindungsgemäße Wirkstoffgemisch deutlich gesteigert, wobei die Aufwandmenge von 20 g/m² eine ebenso gute Düngewirkung zeigt wie die gleich hohe mineralische Düngung (Tab. 1). Herkömmliche Nematizide wie das hier eingesetzte Aldicarb besitzen allein absolut keine das Pflanzengewicht fördernde Wirkung, die Kombination der auf ein Zehntel reduzierten Aufwandmenge Aldicarb mit der erfrndungsgemäßen Wirkstoffkombination erzielte die höchsten Wurzelgewichte.

**Tab. 1:**

| Effekte auf das Pflanzenwachstum von Tomaten | | | |
|---|---|---|---|
| Variante | Sproßgewicht in g | Wurzelgewicht in g | Signifikanz-klasse |
| ungedüngte, unbehandelte Kontrolle | 4 | 1,5 | a |
| Aldicarb 1 ppm | 3 | 1,8 | a |
| gedüngte Kontrolle | 10,2 | 3,1 | b |
| TerraPy B 20 g/m² | 9,9 | 3,5 | b |
| TerraPy B 20 g/m² plus Aldicarb 0.1 ppm | 9,9 | 4,5 | c |

Die Vermehrung des Nematoden M. incognita wurde durch die erfindungsgemäße Wirkstoffkombination signifikant unterdrückt (Tab. 2). Der Effekt war schwächer ausgeprägt als das zu Vergleichszwecken herangezogene Nematizid, aber stärker als bei mineralischer Düngung. Die Kombination der auf ein Zehntel reduzierten Aufwandmenge Aldicarb mit der erfindungsgemäßen Wirkstoffkombination erbrachte einen sehr guten Schutz des Wurzelsystems gegenüber Nematodenschaden.

**Tab. 2:**

| Effekte auf die Wurzelsystem | | |
|---|---|---|
| Variante | Gallindex | Signifikanzklasse |
| ungedüngte, unbehandelte Kontrolle | 7 | e |
| gedüngte Kontrolle | 6,2 | d |
| TerraPy B 20 g/m² | 5,0 | c |
| TerraPy B 20 g/m² plus Aldicarb 0,1 ppm | 3,5 | b |
| Aldicarb 1 ppm | 0,5 | a |

### Beispiel 7

Gefäßversuch mit Tomaten: Kombination mit Mykorrhiza

### Methoden

Tomatensamen wurden im (18°C) temperierten Gewächshaus in Kunststofftöpfe (9x9 cm) mit je 320 g Felderde-Sand-Gemisch (1:1) pikiert. Die Applikation der Testsubstanzen erfolgte 29 Tage nach dem Auflaufen. Zwei Tage später wurden 1.500 Larven des Nematoden Meloidogyne incognita pro Topf inokuliert. 9 Wochen später wurde der Versuch beendet, die Nematodendichte sowie Sproß- und Wurzelgewichte der Pflanzen bestimmt.

In der Anwendung wurden folgende Varianten (mit je 10 Wiederholungen) gewählt:
- ungedüngte, unbehandelte Kontrolle
- gedüngte Kontrolle (N-/P-Menge entspricht 2 g/m² TerraPy B)
- mit Nematizid behandelte Kontrolle (Aldicarb, 1 ppm)
- Mykorrhiza-Pilz-Mischung 0,2%
- TerraPy B 2 g/m²
- TerraPy B 2 g/m² plus Mykorrhiza 0,2%

Die Mykorrhiza-Pilz-Mischung enthielt eine Mischpopulation verschiedener Glomus-Stämme der Arten Glomus sclerocystis und G. gigasporum mit 950 infektiösen Einheiten pro cm³, davon 0,64 g pro Topf. Die Mischung wurde als 0,2%ige Verdünnung zu Versuchsbeginn der Topferde untergemischt.

### Ergebnisse:

Das Pflanzenwachstum wird durch das erfindungsgemäße Wirkstoffgemisch deutlich gesteigert, wobei die Aufwandmenge von 2 g/m² eine bessere Düngewirkung zeigt als die gleich hohe mineralische Düngung (Tab. 1). Mykorrhiza-Pilze erhalten keine Pflanzennährstoffe, fördern aber bei erfolgreicher Wurzelbesiedlung den Aufschluß von Pflanzennährstoffen, was sich in dem sehr guten Sproßfrischgewicht widerspiegelt. Die Kombination Mykorrhiza plus Wirkstoffgemisch TerraPy B führte zu dem signifikant höchsten Sproßgewicht.

**Tab. 1:**

| Effekte auf das Pflanzenwachstum von Tomaten | | |
|---|---|---|
| Variante | Sproßgewicht in g | Signifikanzklasse |
| ungedüngte, unbehandelte Kontrolle | 4,0 | e |
| Aldicarb 1 ppm | 4,2 | de |
| gedüngte Kontrolle | 4,8 | cde |
| TerraPy B 2 g/m² | 5,0 | bcd |
| Mykorrhiza | 5,1 | abc |
| TerraPy B 2 g/m² plus Mykorrhiza | 5,8 | a |

Die Vermehrung des Nematoden M. incognita wurde durch die erfindungsgemäße Wirkstoffkombination signifikant unterdrückt (Tab. 2). Der Effekt war schwächer ausgeprägt als das zu Vergleichszwecken herangezogene Nematizid, aber stärker als bei der Impfung mit Mykorrhiza-Pilzen. Die Kombination der Mykorrhiza-Mischung mit der erfindungsgemäßen Wirkstoffkombination erbrachte einen - mit der Wirkung eines Nematizids zu vergleichenden - sehr guten Schutz des Wurzelsystems gegenüber Nematodenschaden, bei einer Reduktion des Nematodenschadens um 70%.

**Tab. 2:**

| Effekte auf das Wurzelsystem | | | |
|---|---|---|---|
| Variante | Anzahl Gallen pro Wurzelsystem | in Prozent | Signifikanzklasse |
| ungedüngte, unbehandelte Kontrolle | 115 | 100% | a |
| gedüngte Kontrolle | 110 | 96% | a |
| Mykorrhiza | 60 | 52% | b |
| TerraPy B 2 g/m² | 50 | 43% | bc |
| TerraPy B 2 g/m² plus Mykorrhiza | 35 | 30% | cd |
| Aldicarb 1 ppm | 22 | 19% | d |

## Patentansprüche

1. Verwendung von
(a) hydrolysiertem Lecithin zusammen mit
(b) Harnstoff und/oder Harnstoffderivaten
in solchen Mengenverhältnissen von (a) : (b), dass das Gewichtsverhältnis von C: N gleich/kleiner 2,5 ist, als Bodenzusatzmittel bei der Pflanzenaufzucht in Kulturböden, die von pflanzenparasitären Nematoden befallen sind und/oder in denen das angestrebte Ziel der Optimierung des Ergebnisses der Pflanzenaufzucht durch entsprechenden Nematodenbefall gefährdet ist.

2. Verwendung nach Anspruch 1, **dadurch gekennzeichnet, dass** das Bodenzusatzmittel als wässrige Zubereitung in den gefährdeten Bodenbereich eingetragen wird.

3. Verwendung nach Ansprüchen 1 und 2, **dadurch gekennzeichnet, dass** das Bodenzusatzmittel während der Keim- und/oder Wachstumsphasen des zu schützenden Pflanzenguts dem Boden zugesetzt wird.

4. Verwendung nach Ansprüchen 1 bis 3, **dadurch gekennzeichnet, dass** den wässrigen Zubereitungen des Bodenzusatzmittels Pflanzen physiologisch verträgliche Netzmittel - insbesondere vom O/W-Typ - zugesetzt sind, die eine Spreitung der eingetragenen wässrigen Wertstoffphase im Wachstumsbereich der Pflanzenwurzel unterstützen.

5. Verwendung nach Ansprüchen 1 bis 4, **dadurch gekennzeichnet, dass** das hydrolysierte Lecithin zusammen mit Harnstoff in Mischungsverhältnissen (Gewichtsteile) von etwa 1 : 1 eingesetzt werden.

6. Verwendung nach Ansprüchen 1 bis 5, **dadurch gekennzeichnet, dass** das Bodenzusatzmittel - bezogen auf die wasserfreie Abmischung - in Mengen von wenigstens 0,2 g/m², vorzugsweise in Mengen von 1 bis 60 g/m² und insbesondere von 10 bis 40 g/m² ausgebracht wird.

## Claims

1. The use of
(a) hydrolyzed lecithin together with
(b) urea and/or urea derivatives
in such quantity ratios of (a) to (b) that the ratio by weight of C to N is 2.5:1 or less,
as a soil additive for plant growth in cultivated soils which are infested by plant-parasitic nematodes and/or in which the desired objective of optimizing the results of plant growth is endangered by corresponding nematode infestation.

2. The use claimed in claim 1, **characterized in that** the soil additive is introduced into the endangered areas of soil as an aqueous preparation.

3. The use claimed in claims 1 and 2, **characterized in that** the soil additive is added to the soil at least partly during the germination and/or growth phase(s) of the plants to be protected.

4. The use claimed in claims 1 to 3, **characterized in that** plant-physiologically compatible wetting agents, more especially of the o/w type, which promote spreading of the aqueous phase introduced in the growth area of the plant roots, are added to the aqueous preparations of the soil additive.

5. The use claimed in claims 1 to 4, **characterized in that** the hydrolyzed lecithin is used together with urea in mixing ratios (parts by weight) of about 1:1.

6. The use claimed in claims 1 to 5, **characterized in that** the soil additive is applied in quantities, based on the water-free mixture, of at least 0.2 g/m², preferably in quantities of 1 to 60 g/m² and more preferably in quantities of 10 to 40 g/m².

## Revendications

1. Utilisation de
a) lécithine hydrolysée conjointement à
b) de l'urée et/ou des dérivés d'urée dans des rapports en quantités de a) et de b) telles que le rapport en poids de C: N soit égal ou plus petit que 2,5, en tant que produit d'addition pour les sols lors de la culture des plantes, dans des sols de culture attaqués par des nématodes parasites des plantes et/ou dans lesquels le but désiré de l'optimisation du résultat de la mise en culture des plantes, est compromis par l'attaque des nématodes.

2. Utilisation selon la revendication 1,
**caractérisée en ce que**
l'additif pour le sol est introduit sous forme de préparation aqueuse dans la zone de sol contaminé.

3. Utilisation selon la revendication 1 et la revendication 2,
**caractérisée en ce que**
l'additif pour le sol est ajouté au sol pendant les phases de germination et/ou de croissance du produit végétal à protéger.

4. Utilisation selon les revendications 1 à 3,
**caractérisée en ce qu'**
on ajoute aux préparations aqueuses de l'additif pour le sol, des agents de mouillage physiologiquement compatibles pour les plantes, en particulier du type E/H, qui favorisent la dispersion des phases de substances de valeur, aqueuses, introduites dans la zone de croissance des racines de plantes.

5. Utilisation selon les revendications 1 à 4,
**caractérisée en ce que**
la lécithine hydrolysée est mélangée conjointement avec de l'urée dans des rapports de mélange (parties en poids d'environ 1:1)

6. Utilisation selon les revendications 1 à 5,
**caractérisée en ce que**
l'additif pour sols est, rapporté au mélange anhydre, en quantités d'au moins 0,2 g/m², de préférence en quantités de 1 à 60 g/m² et en particulier de 10 à 40 g/m².
